Europäisches Patentamt

European Patent Office

Office européen des brevets

(19)

(11) Publication number: **0 077 657**
**A2**

(12) # EUROPEAN PATENT APPLICATION

(21) Application number: **82305495.2**

(22) Date of filing: **15.10.82**

(51) Int. Cl.³: **G 06 F 3/04**

(30) Priority: **15.10.81 US 311510**

(43) Date of publication of application:
**27.04.83 Bulletin 83/17**

(84) Designated Contracting States:
**DE FR GB**

(71) Applicant: **CONVERGENT TECHNOLOGIES INC.**
**2500 Augustine Drive**
**Santa Clara California 94303(US)**

(72) Inventor: **Garrow, Robert A.**
**108817 Linda Vista Drive**
**Cupertino California 95014(US)**

(72) Inventor: **Lowenthal, Richard W.**
**21535 Madrone Avenue**
**Los Gatos California 94030(US)**

(72) Inventor: **Kiremidjian, Frederick**
**330 Cabrillo Avenue, 1**
**Santa Clara California 95051(US)**

(74) Representative: **Paget, Hugh Charles Edward et al,**
**MEWBURN ELLIS & CO. 2/3 Cursitor Street**
**London EC4A 1BQ(GB)**

(54) Apparatus and methodology for configuration of an input/output digital circuit among different input/output protocols.

(57) An interface circuit coupled to a computer operating system through a local input/output bus is selectively configurable into one of two circuit configurations for communicating with an external user in one of two corresponding different protocols. The configuration of the interface circuit is selected by using a switching assembly to select between two sets of input/output buffer circuits, wherein each set is configured to communicate in a different protocol. In one embodiment, the switch assembly is comprised of a plurality of manually manipulated plug and socket combinations.

FIG.1

EP 0 077 657 A2

- : -

### APPARATUS AND METHODOLOGY FOR
### CONFIGURATION OF AN INPUT/OUTPUT DIGITAL CIRCUIT
### AMONG DIFFERENT INPUT/OUTPUT PROTOCOLS

The present invention relates to the field of interfacing communication channels and in particular, it relates to an improved method and circuitry for interfacing users communicating according to different protocols on a communication channel.

A computer operating system typically includes a number of internal busses and a variety of peripheral devices through which the system is used. It is not uncommon for peripherals to communicate with the computer operating system over a local input/output bus. This means, of course, that each of the peripherals and other elements within the computer operating system must be able to communicate according to the same protocol. Protocol is defined here to refer to the unique characterization of signals according to their significance, voltage levels, timing and number.

In order to communicate with peripherals which do not operate according to the same protocol as that used on the local input/output bus, prior art computer systems have used dedicated peripheral communication channels specially configured to communicate between their local input/output bus and such peripherals. Each such specially configured communication channel includes circuitry that translates communications between the protocol used on the local input/output bus and that used by the interfaced peripheral. In fact, there has arisen in the prior art well-recognized and established standards for input/output protocols used by such peripherals. Two such standards are known as RS-232 and RS-422. The preferred embodiment of the present invention described hereinafter with reference to the drawings is arranged to provide selective communication according to these two standards.

Prior art interface circuitry, however, has been designed to translate communications between one local input/output bus protocol and only one peripheral input/output protocol. Consequently, to communicate between a computer system and different peripherals operating according to different communication protocols, it has been the practice to provide a separate and dedicated peripheral communication channel for each different protocol.

What is needed then is a circuit and method for selectively changing the translation between a local communication channel protocol and an exterior user protocol.

The present invention is an improved method and circuitry for communicating a communication channel and a user according to a protocol selected from a plurality of different permissible protocols. The improved method of the present invention comprises the step of selectively configuring an interface circuit in one of different selectable circuit configurations to execute communications between the communication channel and users according to a selected permissible protocol. For users operating according to a different permissible user protocol, the configuration of the interface circuit is selectively changed to execute communications according to the different permissible protocol. By virtue of this improved method for interfacing a communication channel and its users, a single communication channel operating according to a single communication protocol can be selectively communicated with different users operating according to different communication protocols.

The improved circuitry of the present invention comprises an interface circuit selectively configurable for interfacing the communication channel for communication with users operating according to different permissible protocols. A switching means is coupled to the interface circuit and is selectively operable to configure such circuit for communicating the communication channel with users according to a selected one of the permissible user protocols. By virtue of the improved circuitry for interfacing a communication channel and its users, a single selectively configurable interface circuit provides communication between a communication channel operating according to a single communication protocol and users operating according to different communication protocols.

The improved interface circuitry of the present invention enables the construction of multi-channel communication systems capable of communicating with users operating according to different combinations of protocols. More particularly, one embodiment of the improved interface circuitry comprises first and at least second channels of communication, at least one of which is interfaced to users operating according to different communication protocols. A first interface circuit is coupled to the first channel to communicate with a user according to a first protocol. A second interface circuit is coupled to the second channel and is selectably configurable to communicate with a user according to a protocol selected from either the first or at least a second permissible protocol. Switching means is provided for selectively configuring the second interface circuit to communicate with the user according to a selected one of the permissible protocols. By this combination of elements, a dual channel interface circuit has at least one channel of communication which is switchable or otherwise arbitrarily configurable in different protocol translation modes, whereby the two communication channels are capable of communicating with users operating according to different selected combinations of protocols.

The improved circuitry of the present invention is particularly useful for communicating a computer operating system and a user. The computer operating system is coupled to an input/output bus and an input/output interface circuit is coupled to the bus for communicating it to the user. The input/output interface circuit is coupled to a first receiver means for receiving user compatible signals communicated by a user according to a first protocol and couple corresponding signals to the input/output interface circuit compatible with the protocol of such circuit. A first transmitter means is coupled to receive signals from the input/output interface circuit communicated according to protocol of such circuit and transmit user compatible signals to the user according to the first protocol. A second receiver means is coupled to receiving user compatible signals communicated by a user according to a second protocol and couple corresponding signals to the input/output interface circuit compatible with the protocol of such circuit. A second transmitter means is coupled to receive signals from the input/output interface circuit communicated according to the protocol of such circuit and transmit user compatible signals according to the second protocol. Switching means is operatively associated with the receiver and transmitter means for selectively coupling the first receiving and transmitting means and the second receiving and transmitting means between the input/output interface circuit and the user. By virtue of this combination of elements, the computer operating system can communicate with users through the input/output interface circuit in a protocol arbitrarily selected from the first and second protocols.

The improved interface method of the present invention is practiced conveniently by communication receiver and transmitter circuits coupled between the communication channel and a user. More particularly, such embodiment of the improved method comprises the steps of selectively switching communication from a user to a communication channel through first and second receiver buffer circuits, which are adapted to receive communications from users according to first and second protocols, respectively. Both first and second receiver buffer circuits are adapted to couple communications to the channel according to the protocol of the channel. In another step, communication from the channel to the user is selectively switched through first and second transmitter buffer circuits, which are adapted to transmit communications to the user in the first and second protocols, respectively. Both first and second transmitter buffer circuits are adapted to receive communications from the channel in the protocol of the channel and transmit corresponding communications in their respective transmitting protocols.

The present invention and its various advantages and objects can be better understood by viewing the following figures wherein like elements are referenced by like numerals.

FIGURE 1 is a block diagram showing the coupling of the interface circuitry to a local input/output bus which is also coupled to a computer operating system.

FIGURE 2 is a circuit diagram of the interface circuitry of Figure 1 as configured to communicate in the RS-232 protocol.

FIGURE 3 is identical to the circuit diagram of Figure 2, except that the interface circuitry is configured to communicate with the user in the RS-422 protocol.

The present invention is an improvement in interfacing communications wherein the translation between a local communication channel protocol and an external user protocol can be selectively controlled. The improvement includes circuitry and a method by which the configuration of an interface circuit coupled between the communication channel and the external user can be selectively and readily changed to allow the communication channel to communicate with the external user in a selected one of different protocols. Clearly, the present invention includes applications where two or more protocols may be selected.

In the illustrated embodiment, the change in configuration of the interface circuit is accomplished by switching communication between the communication channel and the user through different ones of two separate sets of buffer circuits, each of which is adapted to translate communications between the communication protocol of the communication channel and one of the user protocols. However, it is entirely within the scope of the present invention to effect the desired reconfiguration of the interface circuitry through an internal reorganization of one set of buffer circuitry rather than a selection among two. The latter reconfiguration is employed in the preferred embodiment solely for the purpose of convenience of adaptation of the present invention to the RS-232 and RS-422 protocols employed in the preferred embodiment of the invention. Other groups of protocols may be included now or in the future which would allow reconfiguration of the interface circuit by means of reorganization within a given set of buffer circuits.

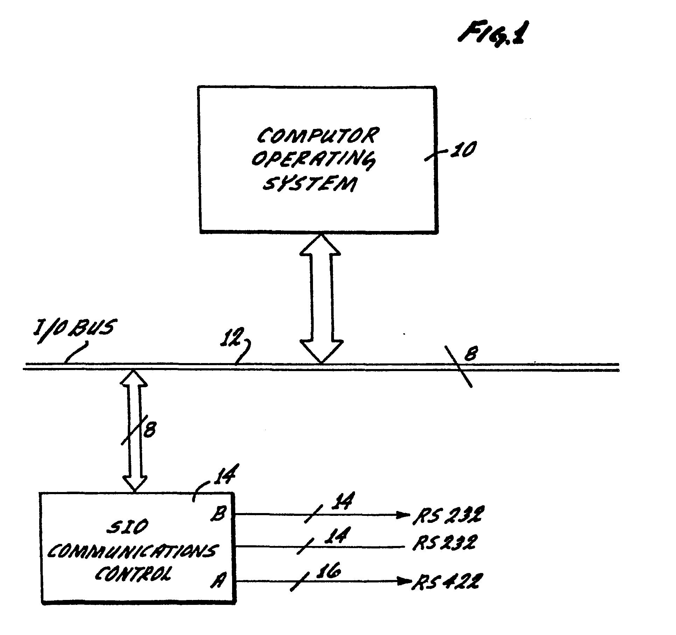

The illustrated embodiment can best be understood by first considering the environment in which it operates as shown in Figure 1. Computer operating system 10 contains a large number of differing elements such as a general purpose central processor, internal clocks, dedicated and special purpose central processors, various types of memory, direct memory addressing logic, video control circuitry and so forth. Computer operating system 10 is coupled to a local input/output bus 12 which is illustrated as being of byte width. Input/output bus 12 may in turn be coupled to a large number of peripherals which are compatible with the input/output protocol used on bus 12. Such peripherals may include a keyboard interface.'

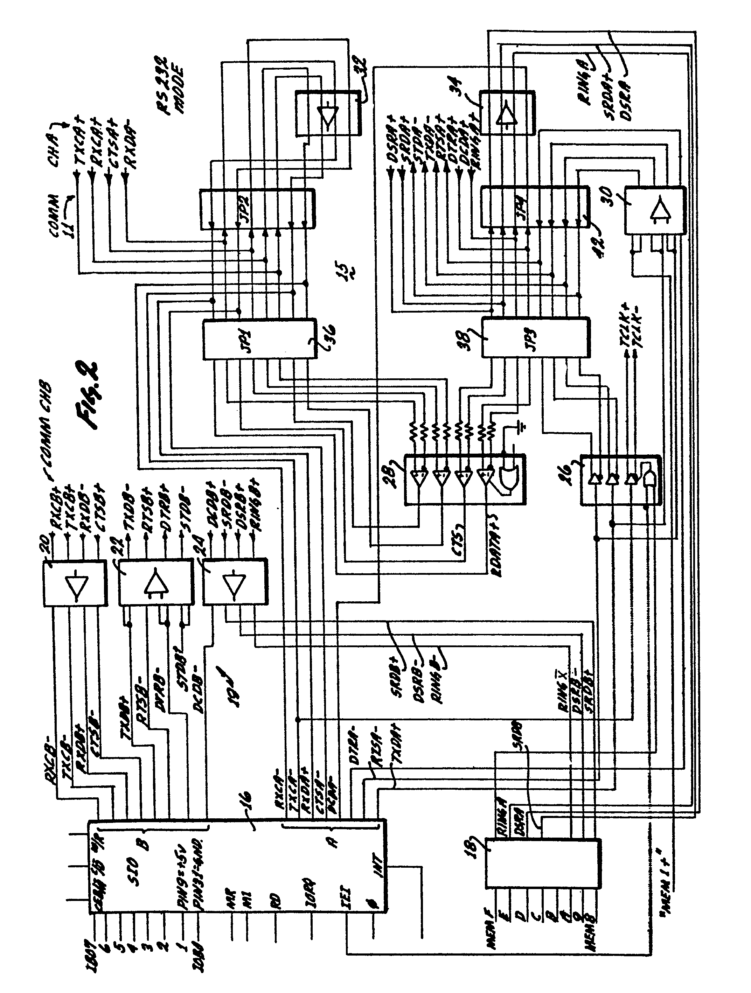

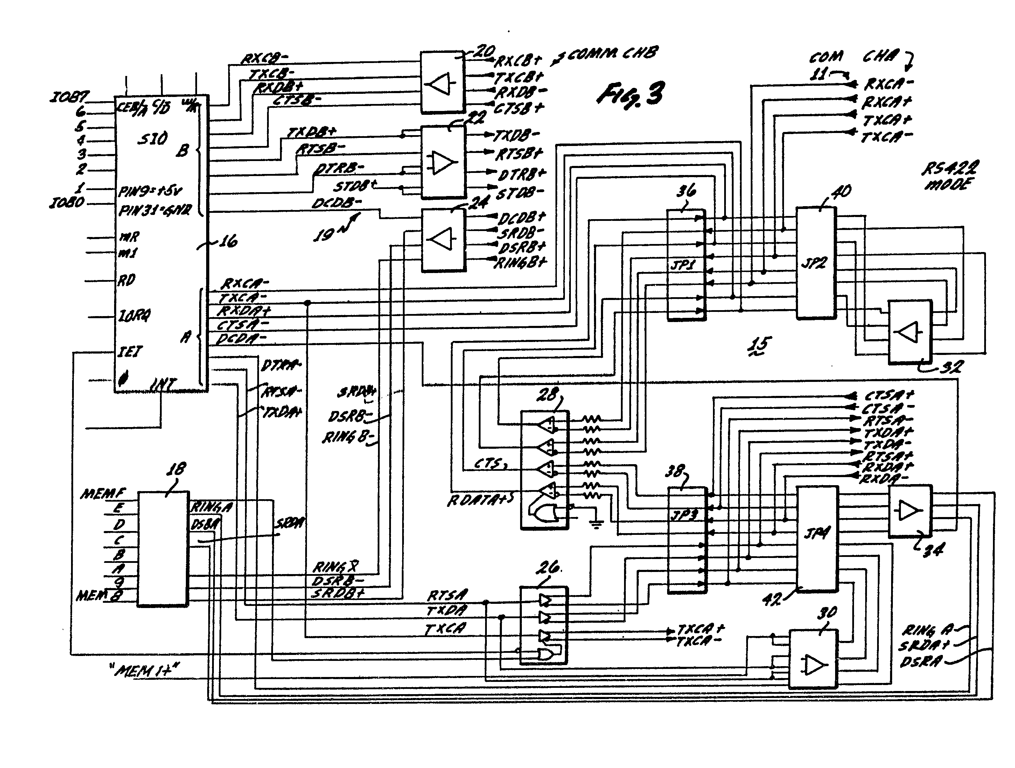

In the illustrated embodiment, bus 12 is coupled to a serial input/output (SIO) communications control circuit 14. According to one feature of the present invention, SIO communications control circuit 14 has at least two channels, channel A and channel B, for communication with external peripherals. Channel B is capable of compatible interface operation only in one protocol, which in the preferred embodiment is the RS-232 protocol, such operation hereinafter referred to as the RS-232 mode. However, according to the present invention, channel A is capable of being selected to operate in one of at least two protocols, which in the preferred embodiment are either the RE-232 or RS-422 compatible protocols or modes. The RS-232 mode is characterized by a 14 pin input/output while the RS-422 mode is characterized by a different 16 pin input/output. In the preferred embodiment of the present invention, a single 16-pin terminal device, indicated generally in Figures 2 and 3 by reference number 11, is employed for coupling R-232 and R-422 users to channel A. For RS-232 users, two pins are not used.

A portion of the SIO communications control circuit 14 is illustrated in Figures 2 and 3. Figure 2 shows the circuit configuration and input/outputs in the RS-232 mode, while Figure 3 shows the circuit configuration and input/outputs in the RS-422 mode.

Circuit 14 is primarily based on a serial input/output chip, a conventional and well-known integrated circuit 16 sold as a serial input/output communications (S10) chip, type Z80A-S10. Circuit 16 is operatively associated with a 16-bit register 18 to provide two input/output channels, channel A and channel B. In the preferred embodiment of the present invention, the S10 chip of circuit 16 is operatively associated with the 16-bit register 18 so that the S10 communication control circuit 14 communicates with both channels A and B in the same protocol. Register 18 is a conventional register sold as type 74LS 244.

In the circuitry, as illustrated in Figures 2 and 3, channel A has the greatest flexibility. Channel A includes interface circuitry indicated generally by reference number 15 that enables channel A to operate in either an RS-232 or an RS-422 mode, which channel can be controlled for communications purposes by either a CPU or local DMA within computer operating system 12. In DMA transfers, the communication channel, channel A or B, operates only in half duplex mode since only one DMA channel is allocated to communcation and circuit 16 has only one ready line per channel for use as a DMA request signal.

Greater speeds can be used when the circuitry of Figure 2 or 3 is configured as in Figure 3 in the RS-422 interface mode. The RS-422 mode differs from the RS-232 mode primarily on the basis that RS-422 is a balanced-differential interface with an ability to transmit clocks on signals that are separate from the data.

The operation of S10 control circuit 14 can be better understood if the signals comprising the RS-232 and RS-422 modes are first listed and defined. Table 1 lists the signals which comprise the RS-232 mode together with their acronyms as appear in Figures 2 and 3. Similarly, Table 2 lists and defines the RS-422 signals.

<div align="center">

RS-232                  Table 1

</div>

| Function | Pin |
|---|---|
| Protective ground | PGND |
| Transmit Data | TXD- |
| Receive Data | RXD- |
| Request to Send | RTS+ |
| Clear to Send | CTS+ |
| Data Set Ready | DSR+ |
| Signal Ground | SGND |
| Carrier Detect | DCD+ |
| Secondary Transmit Data | STD- |
| Transmit Clock | TXC+ |
| Secondary Receive Data | SRD+ |
| Receive Clock | RXC+ |
| Data Terminal Ready | DTR+ |
| Ring | Ring+ |

RS-422                          Table 2
  Function                          pin

    Protective Ground ...................PGND
    Transmit Data      ..................TXD+
    Transmit Clock    (DTE)*............TXC+
    Transmit Data      ..................TXD-
    Transmit Clock    (DTE)*............TXC -
    Clear to Send      ..................CTS +
    Signal Ground ......................SGND
    Receive Data       ..................RXD +
    Request to Send    ..................RTS -
    Receive Clock      ..................RXC-
    Clear to Send      ..................CTS-
    Receive Clock ......................RXC+
    Transmit Clock    (DCE)*............TXC+
    Request to Send    ..................RTS+
    Receive Data       ..................RXD-
    Transmit Clock    (DCE)*............TXC-

*DTE means data terminal equipment is a source of the clock signal.

*DCE means data communications equipment is a source of the clock signal.

The acronyms used in the table are identical to those conventionally used within the EIA standards and will not be further explained here. In Figures 2 and 3, the acronyms listed in Table 1 or 2 are employed to identify the lines on which the signals appear and will have a suffix "A" or "B" according to whether the line and signal is associated with channel A or channel B.

Again, no detail will be given concerning the exact significance of these signals and how they may be employed to advantage in the overall computer operating system because they are not relevant to understanding and illustrating the present invention. Therefore, a detailed discussion of the RS-422 and RS-232 protocols as used in computer operating system 12 through S10 communications control circuit 14 have been omitted here for the sake of clarity and in order to more specifically focus upon the significant features of the described invention.

As is readily apparent in Figures 2 and 3, channel B of the operatively associated S10 circuit 16 and register 18 communicates directly with interface circuitry indicated generally by reference number 19 comprising a plurality of buffer circuits 20, 22, and 24. Again, buffer circuits 20-24 are conventional circuits which in the case of buffers 20 and 24 are receiver buffer circuits sold as type 1489 and in the case of buffer 22 is a transmitter buffer circuit sold as type 1488. The signals coupled through channel B, by means of buffer circuits 20-24, are derived by the cooperative action S10 circuit 16 and register 18 in response to the input/output bus and various control inputs shown on the top, bottom and left side of Figures 2 and 3. In the case of the input/output bus signals, IOB0-IOB7, these lines are coupled directly to the input/output bus 12. The other S10 control signals, MR, M1, RD, and so forth, are actually derived from specific, discrete, control signals and discrete logic circuitry also included within circuit 14 to effectuate the options and performance designed into computer operating system 10. For the purposes of clarity, this discrete logic circuitry has been omitted from Figures 2 and 3 and it may be assumed that each signal line directed to the left side of Figures 2 and 3 is either directly coupled to input/output bus 12 or is indirectly coupled thereto through random logic circuitry included with circuit 14, which circuitry generates the inputs to register 18 and S10 circuit 16 with an associated significance which is not material to understanding the present invention.

Referring now to channel A, its interface circuitry 15 includes buffer circuitry for communicating according to the RS-422 protocol comprising transmitter buffer circuit 26 and receiver buffer circuit 28. Similarly, interface circuitry 15 includes RS-232 buffer circuitry comprised of transmitter buffer circuit 30 and receiver buffer circuits 32 and 34.

Channel A of the operatively associated S10 circuit 16 and register 18 is switched between the RS-422 circuitry on one hand, and the RS-232 circuitry on the other hand by means of a switching assembly comprised of switches 36 and 38 in the case of the RS-422 buffer circuits; and switches 40 and 42 in the case of the RS-232 buffer circuitry. In the illustrated embodiment, switches 36-42 are comprised of dual-in-line packages providing connections through mating plugs and sockets and in which opposite pins are strapped together by a copper bus or conductor. Such jumper plugs are well-known to the art. Thus, as will be described below, the buffer circuitry of channel A can be configured by means of manually removing the jumper plugs from switches or sockets 40 and 42 and inserting the plugs in switches or sockets 36 and 38. According to the present invention, removal of the plugs from switches 40 and 42 disconnects the RS-232 buffer circuitry and insertion of the plugs in switches 36 and 38 connects the RS-422 buffer circuitry.

Although the switching means or assembly has been described as a plurality of mechanical or manually manipulatable junction plugs and sockets in combination, it must be clearly kept in mind that many other modifications and alterations may be made by those having ordinary skill in the art without departing from the scope of the invention as defined in the claims below. For example, it is entirely within the scope of the present invention that the manually manipulatable/plug socket combination used in the preferred embodiment could be replaced by an equivalent switching circuit, enabled and disabled by discrete command signals originating in computer operating system 10.

The circuitry and method of the present invention can be better understood by considering in detail the coupling of the RS-232 mode input and output lines of the terminal device 11 through the switching assembly to channel A of S10 circuit 16 and register 18. Considering only Figure 2, the RS-232 lines, other than protected and signal grounds, as listed in Table 1, are shown on the right hand edge of Figure 2 beginning at the top with the transmit clock signal for channel A, TXCA+ and ending in the bottom with the ring indicator for channel A, RING A+. The jumper plugs are inserted in switches 40 and 42. Each of the four RS-232 input lines in the upper part of Figure 2, namely TXCA+, RXCA+, CTSA+ and RXDA- are coupled through switch 40 to the input of receiver 32, which is a conventional buffer circuit sold as type 1489. The outputs of receiver 32 are then coupled back through switch 40 at those points indicated by the arrows entirely included within the rectangle representing switch 40. Each of the outputs from receiver 32 are then coupled to the corresponding inputs as labeled at the channel A input ports of S10 circuit 16.

Similarly, the input lines DSRA+, SRDA+, RING A+, and DCDA+ are coupled as inputs through switch 42 to the inputs of receiver 34, also a conventional buffer circuit sold as type 1489. The outputs of receiver 34 are then appropriately coupled to register 18 in the case of RING A+, DSRA+ and SRDA+ and to the appropriate channel A input of SIO circuit 16 in the case of DCDA+.

Transmitter 30, whose inputs are derived from the outputs DTRA-, RTSA-, TXDA+ of channel A of SIO circuit 16 and from random logic ultimately coupled to the input/output bus, has its outputs coupled through switch 42 to the corresponding RS-232 output lines listed on the right side of Figure 2.

Thus, the entire RS-232 input/output pin configuration and protocol is appropriately coupled through switches 40 and 42 to the appropriate points within circuit 14. Switches 40 and 42 serve two functions; they select the proper receivers and transmitters for coupling the terminal device 11 to the appropriate points within the SIO circuit 14, and they also isolate all receivers and transmitters from the terminal device 11, except those used in the selected protocol operating mode. When the RS-422 mode of operation is selected in place of the RS-232 mode of operation, the jumper plug of the switch 42 is removed to isolate the outputs of the transmitter 30 and inputs of receiver 34 from the terminal device 11. Switch 40 has its jumper plug removed to isolate the inputs of the receiver 32 from the terminal device 11, as well. However, the outputs of the receiver 32 are coupled to the same points within the SIO circuit 14 as certain outputs of the receiver 28 used in the RS-422 mode. For this reason, the outputs of the receiver 32 are advantageous couple to the SIO circuit 14 through the switch 40 so that they are isolated from the terminal device 11 when the apparatus is in the RS-422 mode of operation. In this manner, the receivers and transmitters used in the RS-232 operating mode are isolated from the incompatible and potentially harmful voltage and current levels of signals present on the lines of the terminal device 11 when channel A of the apparatus is in the RS-422 mode of operation.

Figure 3 illustrates the same interface circuitry 15 of Figure 2, but connected to operate in the RS-422 mode of operation. Figures 2 and 3 differ principally in the direction of arrows associated with the switches 36-42 signifying the direction of communication through the interface circuitry 15 and acronyms which have been attributed to the input/output lines appearing on the right edge of Figure 3 as compared to those appearing on the right edge of Figure 2. Generally, a different significance is attributed to each of the input and output lines as a result of the switching executed by the switching assembly, principally switches 36 and 38.

Consider first the input lines at the upper right hand corner of Figure 3, namely RXCA-, RXCA+, TXCA+ and TXCA-. Each of these lines are coupled through switch 36 to an input of differential receiver 28. The signal on the line TXCA+ is matched with signal on the line TXCA- at the paired differential inputs of receiver 28. Receiver 28 is a conventional differential buffer circuit sold as type 26LS32. The upper two outputs of receiver 28 are coupled back through switch 36 and to the RXCA- and TXCA- channel A inputs of S10 circuit 16. As in the case with receiver 32, the inputs and outputs of the upper half of receiver 28 are completely isolated by removal of the jumper plug from switch 36. Again, the removal of the plug from switch 36 isolates the inputs and outputs of the upper half of the receiver 28 from the terminal device 11 to protect that receiver from the incompatible and potentially harmful voltage and current levels of signals present on the lines of the terminal device 11 when channel A of the apparatus is placed in the RS-232 mode of operation in favor of the RS-232 mode of operation.

Similarly, the input lines CTSA+, CTSSA-, RXDA- and RXDA+ are coupled through the upper half of switch 38 to four matched inputs in the lower half of receiver 28. The outputs carrying the clear-to-send signal and the read-data signal are coupled through switch 36, indicated by arrows totally contained within the rectangle defining switch 36, to the received date, RXDA+, and clear-to-send and CTSA- inputs of the channel A port of circuit 16. Removal of the plugs from switches 36 and 38 protectively isolates the inputs and outputs of the lower half of the receiver 28 as described hereinbefore with reference to the upper half of the receiver 28.

Similarly, the inputs of differential transmitter 26 on lines TXCA-, TXDA+, and RTSA- are derived from the appropriate channel A outputs of circuits 16 and are coupled through a conventional transmitter circuit sold as type 26LS31. The differential outputs of transmitter 26 include the transmit clock signals, TXCA+ and TXCA-, which are coupled by correspondingly labeled output lines extending from transmitting 26 to the terminal 11. The other two pair of differential outputs or four outputs of transmitter 26 are coupled through the lower half of switch 38 and appear at lines RTSA-, RTSA+, TXDA-, TXDA+ at the middle of the right hand edge of Figure 3, on which the remaining active portions of the RS-422 mode signals appear as summarized in Table 2. Removal of the plug from switch 38 protectively isolates the outputs of the transmitter 26 from the potentially harmful current and voltage levels present on the lines of the terminal device 11 when channel A of the apparatus is in the RS-232 mode of operation.

Although the illustrated embodiment has been described in connection with certain specific types of circuitry implementing equally specific protocol modes, the innvention is much broader and could be applied to any application where an input/output circuit couples a local input/output bus through external peripherals operating under various synchronous and asynchronous bit and byte oriented protocols.

CLAIMS

1. An improvement in a circuit for communicating between a computer operating system and a user, said computer operating system being coupled to an input/output bus, an input/output interface circuit being coupled to said bus, said improvement comprising:

a first receiver means for receiving user-compatible signals from the user according to a first protocol and communicating same to the input/output interface circuit;

a first transmitter means for receiving signals from the input/output interface circuit and transmitting user-compatible signals to the user according to said first protocol;

a second receiver means for receiving user-compatible signals from the user according to a second protocol and communicating same to the input/output interface circuit;

a second transmitter means for receiving signals from the input/output interface circuit and transmitting user-compatible signals to the user according to said second protocol; and

switching means for selectively coupling said first receiving and transmitting means and said second receiving and transmitting means to said input/output interface circuit,

whereby said computer operating system can communicate to said user through said input/output interface circuit in an arbitrarily selected protocol 2. The improvement of Claim 1 wherein each of said first and second receiving means has a plurality of inputs and corresponding outputs for communicating signals from the user to the input/output interface circuit, each of said first and second receiving means has at its inputs and outputs electrically isolated from the user and at least some of its outputs electrically isolated from said input/output interface circuit by said switching means when the other of the first and second receiving means is selected.

3. The improvement of Claim 2 wherein said switching means is a plurality of switches.

4. The improvement of Claim 3 wherein each one of said plurality of switches is a dual-in-line plug.

5. The improvement of Claim 3 wherein said plurality of switches includes four dual-in-line sockets, one pair of said sockets for coupling said first receiver and transmitter to said input/output interface circuit, and the other pair of said sockets for coupling said second receiver and transmitter means to said input/output interface circuit, one socket of each pair being used to electrically isolate the inputs and outputs of said first and second receiver means from the user and at least some of their outputs from said input/output interface circuit.

6. The improvement of Claims 1 and 2 further comprising:

a third receiver means for receiving user-compatible signals from said user according to said first protocol and communicating same to the input/output interface circuit; and

a third transmitter means for receiving signals from the input/output interface circuit and transmitting user compatible signals to said user according to said first protocol.

7. An improvement in an input/output circuit having at least two separate channels of communication to a user, said improvement comprising:

a first circuit coupled to said first channel to communicate with said user according to a first protocol;

a second circuit coupled to said second channel to communicate with said user according to a protocol selected from said first and second protocol; and

switching means for selectively configuring said second circuit to communicate with said user according to a selected one of said first and second protocols,

whereby a dual channel input/output circuit has at least one channel of communication arbitrarily configurable in one of two different protocols.

8. The improvement of Claim 7 wherein said second circuit includes a first sub-circuit for communicating according to said first protocol and a second sub-circuit for communicating according to said second protocol, said switching means for selectively coupling said first and second sub-circuits to said user and second channel of said input/output circuit according to said corresponding protocol selected.

9. The improvement of claim 8 wherein said switching means is a plurality of switches coupled between said user and said first and second sub-circuits.

10. The improvement of Claim 9 wherein said first and second sub-circuit each includes first and second receiver and transmitter buffer circuits, respectively.

11. The improvement of Claim 10 wherein each receiver buffer circuit has a plurality of inputs coupled to the user and a plurality of corresponding outputs coupled to the second channel of said input/output circuit, said switching means coupled to electrically isolate the inputs and outputs of each of said first and second receiver buffer circuits from said user and at least some of its outputs from input/output circuit when the other of the first and second receiver buffer circuits are selected.

12. The improvement of Claims 7, 10 or 11 wherein said switching means is a plurality of dual-in-line plugs.

13. An improvement in a method for selectively communicating a communication channel and users communicating according to different permissible protocols comprising the step of selectively configurating an interface circuit in one of different selectable circuit configurations to execute communications between said communication channel and users according to a selected permissible protocol, which interface circuit executes communications according to different permissible protocols when configured in different selectable circuit configurations.

14. The improvement of Claim 13 wherein said step of configuring includes the steps of:

selectively coupling one of different selectable receiver buffer circuits between the communication channel and user for each selectable circuit configuration for receiving communications from users according to the selected permissible protocol; and

selectively coupling one of different selectable transmitter buffer circuits between the communication channel and user for each selectable circuit configuration for transmitting communications to the user according to the selected permissible protocol.

15. The improvement of Claim 14 wherein the steps of selective coupling is effected by operating a switching means to coupled selected ones of the receiver and transmitter buffer circuits between the communication channel and user for communication therebetween and to uncouple unselected ones of the receiver and transmitter buffer circuits between the communication channel and user for disabling communication through the unselected circuits.

-24-

16. The improvement of Claim 15 wherein operation of the switching means includes the steps of manually inserting an electrical plug in a mating electrical contact and removing an electrical plug from a mating electrical contact to effect the selective coupling.

17. The improvement of Claims 14 and 15 wherein said steps of selectively coupling one of different selectable receiver buffer circuits includes the step of electrically isolating the inputs and outputs of the unselected receiver buffer circuits from the user and the outputs of certain of the unselected receiver buffer circuits from the communication channel, respectively.

18. An improved circuit for communicating a communication channel to a user terminal for communication with users communicating according to different permissible protocols, comprising:

an interface circuit coupled between the communication channel and the user terminal switchable to form different circuit configurations each for communicating said communication channel and said user terminal according to a selected one of the permissible protocols; and

switching means for selectively switching the interface circuit to one of the different circuit configurations for communicating the communication channel and user terminal according to a selected permissible protocol.

19. The improved circuit of Claim 18 wherein the interface circuit includes a plurality of receiver buffer circuits one for communicating according to each permissible protocol from the user terminal to the communication channel, and a plurality of transmitter buffer circuits one for communicating according to each permissible protocol from the communication channel to the user terminal; and

the switching means selectively couples one of said plurality of receiver buffer circuits and one of said plurality of transmitter buffer circuits between said communication channel and said user terminal for forming the interface circuit configuration that communicates said communication channel and said user terminal according to the selected permissible protocol.

20. The improved circuit of Claim 19 wherein the switching means includes electrical contacts for coupling each receiver buffer circuit and each transmitter buffer circuit to the communication channel and to the user terminal, and a pair of mating electrical plugs one of which selectively engages electrical contacts for coupling a selected receiver buffer circuit and the other of which selectively engages electrical contacts for coupling a selected transmitter buffer circuit for communicating said communication channel and user terminal according to the selected permissible protocol.

Fig.1

Fig. 2

Fig. 3